# EUROPEAN PATENT SPECIFICATION

(11) **EP 1 175 874 B1**
(45) Date of publication and mention of the grant of the patent: **21.06.2006**
(21) Application number: 01118102.1
(22) Date of filing: 26.07.2001
(51) Int. Cl.: A61C 7/00, A61C 7/06

(54) **Palatal facial bow**
Gesichts- und Gaumenbogen
Arc facial palatal

(30) Priority: 26.07.2000 PT 965200 U
(43) Date of publication of application: 30.01.2002
(73) Proprietor: Santos Pereira, Rui Manuel, 1700-095 Lisboa (PT)
(72) Inventor: Santos Pereira, Rui Manuel, 1700-095 Lisboa (PT)
(74) Representative: Cruz, Jorge

(56) References cited:
- DE-A- 19 635 209

## Description

### Field of the invention

The present invention relates to orthodontical appliances, especially to methods linking extra oral forces to the intra oral environment and, more particularly, to facial bows.

### Prior Art

The existing bows are generally known as facial bows. Such bows usually comprise an inner bow and an outer bow with an approximately semicircular shape, and are linked at the middle line thereof in an appropriate manner, such as in DE19635209.

The inner bow is also linked to the molar teeth by means of tubes placed on the outer face thereof, or tubes welded to the outer face of bands which are cemented to the molar teeth.

The inner bow is also linked to the removable appliances by means of tubes welded to the horizontal area of the Adams' hook or to tubes placed over the vestibular area and/or inter dental area and inserted into the acrylic.

Examples of facial bows of this type may be found in U.S. patent 3.311.987 (Haas); U.S. patent 3.186.089 (Asher); U.S. patent 3.230.621 (Lindquist); U.S. patent 3.314.151 (Rubin); U.S. patent 3.340.613 (DeWoskin); U.S. patent 3.683.313 (Cervera); U.S. patent 3.997.971 (Moos); U.S. patent 4.202.100 (Foster); U.S. patent 4.299.165 (Kurz); U.S. patent 4.245.986 (Andrews); U.S. patent 4.588.380 (Toll); U.S. patent 4.764.110 (Dougherty); U.S. patent 4.330.277 (Beu); U.S. patent 4.453.917 (Nodai); U.S. patent 4.488.872 (Kelly) and U.S. patent 4.509.918 (Clark).

### Summary of the invention

The use of facial bows that are designed for the lingual area of the dental arches is almost absent; in U.S. patent 4.488.872 Kelly Vincent designs a lingual arch whose design and finality differ from the present invention.

The design of the present new facial bow has an exclusive lingual use, being an ideal bow to be used with removable appliances, thus providing an easier, more comfortable and safer way to connect extra oral forces to such a type of appliances.

This new facial bow is easier to handle both from a clinical and a technical point of view with no need for soldering which weakens the clasps and does not permit the use of heavy forces.

Due to the fact that there is no need to use vestibular tubes with wings inserted into the acrylic, they do not prevent the grinding of the acrylic necessary to correct Spee's curve. Also there is no longer any need for a piece traumatising the jugal membrane at the outer face of removable appliances, which makes these appliances more comfortable for the child.

Owing to its design it improves safety in relation to traditional bows when used together with safety releasing springs, for example, in Shendell's U.S. patent 5.511.975.

The facial bow which is the object of the present invention has the following advantages in relation to prior art bows:
- Facial bow designed exclusively for lingual use;
- Clinically it is easily adapted to a removable appliance;
- Technically it is easily incorporated into a removable appliance;
- Clinically it is safer than the traditional design when used together with safety release springs.

### Brief description of the drawings

The drawings annexed hereto do not present a limitative character, they merely aim at rendering the following description more comprehensible. In these drawings:
Figure 1 shows a plane view of a first embodiment of the facial bow which is the object of the invention;
Figure 2 shows a detailed view of the arm of the inner bow;
Figure 3 shows a perspective view of the facial bow;
Figures 4 and 7 show ways of applying the facial bow; and
Figures 8 to 12 show a second embodiment of the facial bow.

### Detailed description of the preferred embodiments of the invention

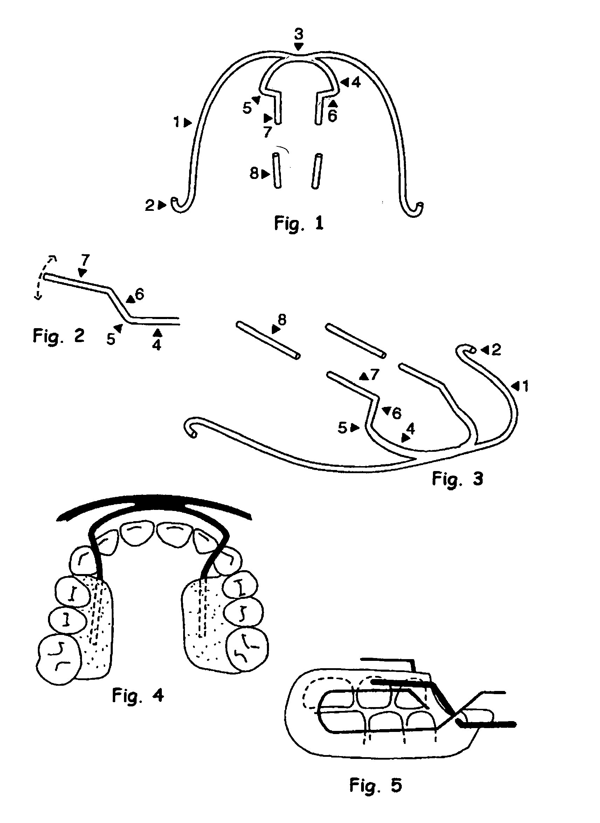

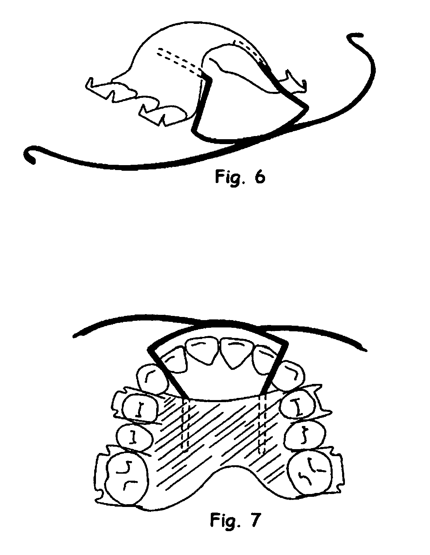

As may be seen in Figures 1 to 7 the facial bow basically consists of two outer arms (1) forming the outer arch and two inner arms (4) forming the inner arch. Each outer arm (1) has a standard design with a hook (2) at each end in order that elastic forces provided by several types of systems with cervical or occipital or mixed anchorage can be attached.

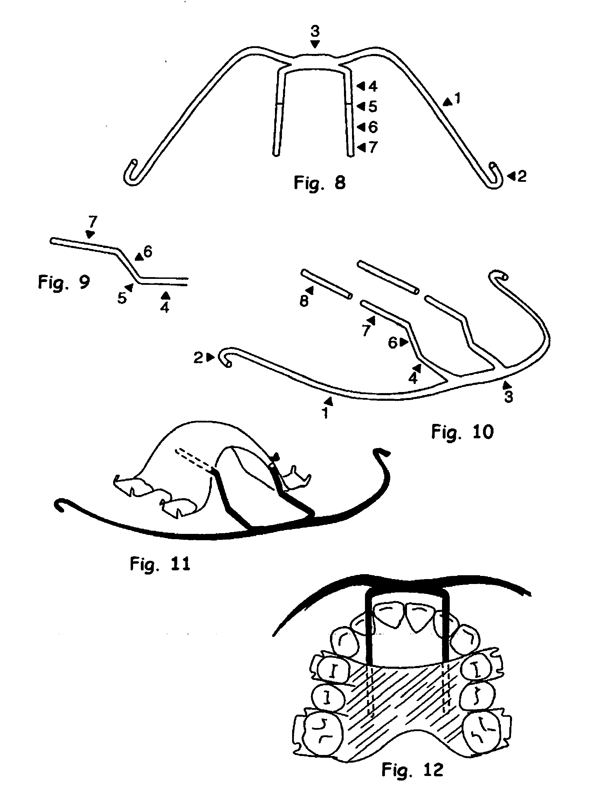

Each inner arm comprises two distinct areas. The first one may be similar to the rounded area of the inner arms of known facial bows and is related to the incisal or canine incisal area or presents a backward direction as shown in a second model of a preferred embodiment in Figures 8 to 12. Furthermore, the inner arm shows a point of inflection (5) relating to the point of inflection of the inner arm towards the lingual area of the dental arches (Figures 1 to 7) or, in the second embodiment, towards the retro incisal lingual area. After inflection point (5) follows segment (6) which corresponds to the lingual part of the facial bow in an upward, backward and inward direction or just in an upward and backward direction as in the second embodiment (Figures 8 to 12). Finally, the inner arm has its end in a segment (7) that is designed to be totally or partially introduced in a tube (8) or directly inserted into the acrylic Said tube (8) is inserted into the acrylic of the removable appliance

The outer and inner arches are linked together at a point (3) close to the middle line. Considering the use of this facial bow, it is nor relevant how the inner arches (4) are linked to the outer arches (1). They can be made from a single unit or from separate units being welded or linked by any other means known within the area of dental or metallurgical craftsmanship.

As is evident to experts in the art, several changes in the models shown here are possible. These variations should however be considered as falling within the scope of the invention which should be limited by the following claim.

## Claims

1. A facial bow basically consisting of two outer arms (1) forming the outer arch and two inner arms (4) forming the inner arch, **characterized in that** the inner arch comprises a rounded area corresponding to the canine-incisal incisal area or presents a backward direction; a point of inflection which corresponds to the point of inflection (5) of each inner arm towards the lingual area of the dental arches or towards the retro incisal lingual area; a lingual segment (6) with an upward, backward and inward direction or just an upward and backward direction; an area (7) to be totally or partially introduced in a tube (8) inserted into the acrylic or directly into the acrylic, and a tube (8) to be inserted into the acrylic.

## Patentansprüche

1. Ein fazialer Bogen bestehend grundsätzlich aus zwei äußeren Armen (1) die den äußeren Bogen bilden und zwei inneren Armen (4) die den inneren Bogen bilden, **dadurch gekennzeichnet, dass** der innere Bogen ein gerundeten Bereich umfasst entsprechend dem Eckzahn-, Schneidezahn-, Schneidezahnbereich oder weist eine rückwärts Richtung auf; eine Biegungsstelle entsprechend der Biegungsstelle (5) von jeder inneren Arme gegen den Zungenbereich der Zahnbögen oder gegen der Rückschneidezahn-, Zungenbereich; ein Zungensegment (6) mit einer Aufwärts-, Rückwärts- und nach innen Richtung, oder nur einer Aufwärts- und Rückwärtsrichtung; ein Bereich (7) der ganz oder teilweise einzuführen ist in ein Rohr (8) das ins Akrylik eingesetzt oder direct ins Akrylik ist; und ein Rohr (8) das ins Akrylik einzusetzen ist.

## Revendications

1. Un arc facial constitué fondamentalement de deux bras extérieurs (1) formant l'arc extérieur et deux bras intérieurs (4) formant l'arc intérieur, **caractérisé en ce que** l'arc intérieur comprend une partie courbée correspondant à la région incisive incisivo-canine ou présente une direction postérieure ; un point d'inflexion correspondant au point d'inflexion (5) de chaque bras intérieur vers la région linguale de l'arcade dentaire ou vers la région linguale rétro-incisive ; une section linguale (6) ayant une direction supérieure, postérieure et intérieure ou uniquement une direction supérieure et postérieure ; une partie (7) à être introduite totalement ou partiellement dans un tube (8) inséré dans l'acrylique ou directement dans l'acrylique ; et un tube (8) à être inséré dans l'acrylique.
